# EUROPÄISCHE PATENTSCHRIFT

(11) **EP 2 284 115 B1**
(45) Veröffentlichungstag und Bekanntmachung des Hinweises auf die Patenterteilung: **24.06.2015**
(21) Anmeldenummer: 10156778.2
(22) Anmeldetag: 17.03.2010
(51) Int. Cl.: B66C 1/28, B65G 47/90, B65B 35/36

(54) **Greifervorrichtung**
Gripper device
Dispositif de préhension

(30) Priorität: 11.08.2009 DE 102009026361
(43) Veröffentlichungstag der Anmeldung: 16.02.2011
(73) Patentinhaber: Krones AG, 93073 Neutraubling (DE)
(72) Erfinder: Kirschner, Peter, 93073 Neutraubling (DE); Baier, Alexander, 93073 Neutraubling (DE); Wegener, Kai, 93073 Neutraubling (DE)
(74) Vertreter: Benninger, Johannes

(56) Entgegenhaltungen:
- EP-A2- 1 020 395
- DE-A1- 2 253 185
- DE-A1- 2 735 791
- DE-A1- 3 024 192
- DE-U1-202005 007 347
- JP-A- S5 187 679
- JP-A- H05 132 147
- JP-U- H0 726 008
- JP-U- S5 111 575

## Beschreibung

Die vorliegende Erfindung betrifft eine Greifervorrichtung zum Erfassen und Greifen von Kästen mit oder ohne darin befindlichen Getränkebehältern, die jeweils nach oben offen und mit seitlichen Ausnehmungen versehen sind.

Bei der industriellen Getränkeabfüllung in Getränkebehälter und Flaschen werden diese von einer Vielzahl von Handhabungsgeräten zwischen zahlreichen Stationen transportiert und zwischen den Handhabungsgeräten jeweils übergeben. Die Getränkebehälter werden üblicherweise zu Gebinden mit mehreren Behältern gruppiert. Diese Gebinde können beispielsweise durch Getränkekästen mit einer regelmäßigen Anzahl von Flaschen gebildet sein. Solche Kästen weisen eine quaderförmige Gestalt mit offener Oberseite zur senkrechten Aufnahme und Entnahme der Flaschen sowie seitliche Ausnehmungen zum Greifen der Getränkekästen auf. Bei der maschinellen Handhabung solcher Getränkekästen werden sog. Hakengreifsysteme eingesetzt, bei denen mindestens ein Getränkekasten von mindestens zwei oder mehr Hakengreifern aufgenommen werden kann, indem diese von oben in die seitlichen Ausnehmungen eingeschwenkt werden und anschließend der Kasten angehoben wird. In Abhängigkeit von der jeweiligen Kastengröße und der Gebindeformation und/oder dem Lagenmuster der Kästen sind die Haken zu Gruppen zusammengefasst. Diese Hakengruppen sind bei herkömmlichen Hakengreifsystemen auf einer gemeinsamen Kippwelle montiert, die zentral über einen gemeinsamen Antrieb angesteuert wird und so die gewünschten Schwenkbewegungen ausführen kann.

Aus der DE 27 35 791 A1 ist ein verfahrbarer Schichtengreifer für Flaschenkästen bekannt, die verbundlos eng an eng angeordnet sind. Der Schichtengreifer weist mehrere verschwenkbare Haken auf, die in offene seitliche Wände der Kästen eingreifen. Allen vier Wänden der Flaschenkästen ist je ein Haken zugeordnet, wobei die einer fluchtenden Wandreihe zugeordneten Haken jeweils an einer gemeinsamen Schwenkwelle angeordnet sind. Zwei rechtwinkelig zueinander verlaufende Gruppen von jeweils zueinander parallelen Schwenkwellen sind in zwei übereinander liegenden horizontalen Ebenen angeordnet. Die beiden übereinander angeordneten Gruppen von Schwenkwellen sind zumindest an den innen liegenden Kreuzungsstellen gegeneinander abgestützt. Je zwei benachbarte, gleichgerichtete Schwenkwellen weisen einen gemeinsamen Drehantrieb auf.

Die DE 30 24 192 A1 offenbart weiterhin einen Greifer zum Beladen und Entpalettieren von Stückgütern wie beispielsweise von Flaschenkästenanlagen in ebenen Lagenverbänden von oben. Der Greifer weist einen zentralen Antrieb und verstellbare Kraftübertragungselemente auf.

In diesem Zusammenhang sind bereits verschiedene Greifervorrichtungen zum Erfassen von Kästen in unterschiedlichen Ausführungsformen bekannt, beispielsweise Einzelhaken, die gefedert ausgeführt sind oder Greifervorrichtungen, die von oben über jeweils zwei Wandungen benachbarter Kästen eingefahren und dann geschlossen werden, so dass das feste Erfassen der Kästen auf Reibschluss beruht. So offenbart beispielsweise die EP 1 020 395 B1 Klemmgreifer für von oben zu greifende Lasten. In dieser Schrift ist von einem Greifer die Rede, der eine Last ergreifen kann, ohne diese untergreifen zu müssen. Beim Anheben der Trageinheit mit den an der Last anliegenden Greifelementen stellt sich durch die Verschiebung der Greifelemente in Lastrichtung relativ zu den Tragelementen selbsttätig ein Klemmhub mit einer vom Gewicht der Last abhängigen Klemmkraft ein. Diese Vorrichtung ist nur durch Erzeugung eines Reibschlusses verwendbar.

Die DE 20 2005 007 347 U1 offenbart ein Roboterwerkzeug zum Aufnehmen und Transportieren eines Behälters mit einem Werkzeuganschlusselement. An diesem Werkzeuganschlusselement befindet sich ein horizontal erstreckendes Trageelement, das eine Verbindung mit einem Roboter bilden kann. Bei der Vorrichtung ist wenigstens ein sich vertikal erstreckender Tragarm mit dem Tragelement schwenkbar verbunden, das an dem von dem Tragelement abgewandten Ende des wenigstens einen Tragarms ein auf den Behälter angepasstes Verbindungselement aufweist. Durch eine Schwenkbewegung des wenigstens einen Tragarms ist der Behälter mit dem Verbindungselement verbindbar oder lösbar. Bei dieser Vorrichtung können allerdings nur Behälter gleicher Größe transportiert oder gegriffen werden.

Die DE 22 53 185 A beschreibt eine Greifervorrichtung zum gleichzeitigen Erfassen mehrerer Flaschenkästen, die nach oben offen und mit seitlichen Handausnehmungen ausgestattet sind. Die höhen- und seitensteuerbare Vorrichtung zum Erfassen der Kästen verfügt über mit in die Handausnehmungen einschwenkbaren und mit hydraulischen Zylindern betätigbare Greiferfinger in Hakenform. Die Greiferfinger sind jeweils an Schub- und/oder Zugstangen gelagert, die in einer Ebene in mehrere Richtungen verstellbar ausgeführt sein können.

Die bekannten Greifvorrichtungen setzen eine definierte Kontur der zu greifenden Gegenstände voraus und müssen zudem exakt geführt und gesteuert werden, um die Gegenstände zuverlässig und sicher greifen zu können.

Ein vorrangiges Ziel der Erfindung besteht darin, eine gattungsgemäße Greifervorrichtung für Getränkekästen oder dgl. Artikel zur Verfügung zu stellen, bei der der Aufbau funktionssicher und mittels geeigneter Ausgestaltung für unterschiedliche Kastenarten einsetzbar ist, um die Kästen einzeln und/oder lagenweise greifen und/oder erfassen zu können.

Zur Erreichung des genannten Ziels offenbart die vorliegende Erfindung eine Greifervorrichtung zum Erfassen und Greifen von Kästen, in denen sich wahlweise Getränkebehälter oder Flaschen befinden können. Die Kästen können unterschiedliche Ausprägungen und Formgebungen aufweisen und sind jeweils nach oben offen. Zudem weisen die Kästen jeweils seitliche Ausnehmungen auf.

Die Aufgabe der Erfindung wird gelöst durch eine Greifervorrichtung nach Anspruch 1.

Die erfindungsgemäße Greifervorrichtung umfasst mindestens zwei oder mehrere Greifereinheiten mit jeweils einer Mehrzahl von verschwenkbaren oder auf andere Weise bewegbaren und jeweils in die seitlichen Ausnehmungen der Kästen einschwenkbaren bzw. einbringbaren Greiferfingern in Hakenform bzw. mit hakenförmigen Enden. Die hakenförmigen Enden der wenigstens zwei Greiferfinger der jeweiligen Greifereinheit in unterschiedlichen Höhen bezüglich der Kastenausnehmungen angeordnet sind. Eine Greifereinheit gemäß der vorliegenden Erfindung umfasst eine Mehrzahl von Greiferfinger wodurch unterschiedliche Kastenarten und/oder -größen beispielsweise zu Gebindelagen palettiert werden können. Des weitern können die Greifereinheiten sowie die Greiferfinger linear verschiebbar angeordnet sein, damit die hakenförmigen Enden der Greiferfinger besser in die Kastenausnehmungen einbringbar oder einschwenkbar und zudem bewegbar sind.

Die Greiferfinger weisen hakenförmige freie Enden auf, die in eine gleiche Richtung weisen. Somit wird das Anheben und die sichere Palettierung unterschiedlicher Kästen innerhalb einer Formation ermöglicht. Die Formation kann beispielsweise reihen- oder lagenförmig ausgebildet sein. Dadurch, dass die mindestens zwei Greiferfinger jeder Greifereinheit in unterschiedlichen Höhen angeordnet sind, ist die Greifervorrichtung relativ tolerant hinsichtlich unterschiedlicher Kastenhöhen und/oder Größen, Abmessungen und/oder Höhen deren seitlicher Ausnehmungen. Verschiedene Kästen mit in unterschiedlichen Höhen befindlichen Ausnehmungen können mit Hilfe der in unterschiedlichen Höhen eingreifenden Greiferfinger problemlos gehandhabt werden.

Die Greiferfinger der Greifereinheiten sind jeweils in einem Sockelbereich gelagert und unabhängig voneinander verschwenkbar oder auf andere Weise bewegbar. Zudem sind die einzelnen Greiferfinger um eine gemeinsame Drehachse im Sockelbereich beweglich gelagert. Die unabhängige Lagerung ermöglicht den Eingriff in unterschiedliche Kastenausnehmungen, wobei der jeweils passende Greiferfinger in die Ausnehmung eingreift, während der oder die anderen Greiferfinger nicht eingreifen müssen und aufgrund ihrer schwenkbaren Lagerung ausweichen und/oder von den geschlossenen Bereichen der Gebinde- oder Kastenwände in eine Ausweichbewegung gezwungen werden können.

Um bei der Greifervorrichtung Platz zu sparen, weisen zumindest einzelne der Greiferfinger Aussparungen auf. Auf diese Weise ist es möglich, die Greiferfinger versetzt übereinander anzuordnen, wobei die Aussparung eines Greiferfingers einen Bewegungsraum für einen zweiten Greiferfinger bilden kann. Bei einer derartigen Anordnung fluchten wenigsten zwei Greiferfinger in einer Ebene bzw. sind in einer gemeinsamen oder annähernd deckungsgleichen Bewegungsebene verschwenkbar. Die Greiferfinger weisen bei dieser Variante eine annähernd C-förmige Kontur unterschiedlicher Größe auf, so dass die beiden in einer gemeinsamen Ebene befindlichen Greiferfinger beabstandet ineinander angeordnet sind. Sofern ein dritter Greiferfinger vorhanden ist, kann dieser in einer dazu parallelen Schwenkebene und mit in einer von den anderen Greiferfingern abweichenden Höhe seines hakenförmigen Greiferendes angeordnet sein.

Die Greiferfinger weisen Schenkel auf, die eine unterschiedliche Länge besitzen und annähernd parallel zueinander angeordnet sind. Die Greiferfinger lassen sich auf diese Weise relativ einfach mittels Stanz- und/oder Biegevorgängen aus geeignetem Blechmaterial herstellen, beispielsweise aus Edelstahl- oder einem Leichtmetallblech. Darüber hinaus sind auch spritzgegossene Varianten aus Kunststoff, ggf. mit einer Faserverstärkung und/oder einer geeigneten Verrippung denkbar.

Damit eine Aktivierung der einzelnen Greiferfinger gewährleistet werden kann, sind die Greiferfinger einer jeden Greifereinheit mit einer Feder ausgestattet, wobei deren Rückstellkraft einer Ausweichbewegung der beweglich gelagerten Greiferfinger beim Auftreffen auf eine Seiten- oder Kastenwand eines zu greifenden Kastens entgegen wirkt. Ein in die Kastenausnehmung eingreifender Greiferfinger wird durch die Rückstellkraft der Feder in Richtung seiner Ruhelage verschwenkt, während der oder die anderen Greiferfinger stärker vorgespannt sind. Mit dieser Ausgestaltung wird nur der Greiferfinger im Betrieb benötigt, der die passende Länge besitzt, um in die Ausnehmung der Kästen einzuschwenken und diese an seiner Griffleiste oder Grifftragefläche zu greifen und/oder zu erfassen. Die Greiferfinger, die an der Kastenwandung anstehen werden durch die Rückstellkraft etwas um die Drehachse nach hinten verschwenkt.

Die Rückstellkraft der Feder kann ggf. für die einzelnen Greiferfinger justierbar sein. Dies kann vorteilhaft sein, wenn die unterschiedlich langen und damit mit unterschiedlichen Hebelkräften am Kasten angreifenden Greiferfinger mit einer nahezu gleichen Rückstellkraft versehen werden sollen.

Die hakenförmigen Enden der Greiferfinger weisen eine Auflagefläche auf, die die Kästen in ihren Ausnehmungen greifen und somit anheben können. Damit die Kästen während ihres Palettierens sicher geführt werden, können die Auflageflächen vorzugsweise geriffelt und/oder beschichtet und/oder ein rutschhemmendes Material aufweisen. Weiterhin können sogenannte Zentrierfinger als Gegenlager zu den gefederten Greiferfingern dienen. Dabei sind die Zentrierfinger an der Gegenseite der Kastenwand und direkt gegenüber den gefederten Greiferfingern so angeordnet, dass sie bei beispielsweise nachgebenden Kastenwandungen abstützend wirken, so dass eine Verformung der Kastenwand verhindert wird.

Die Greifervorrichtung kann mehrere Greifereinheiten umfassen, die mittels einer Welle im Sockelbereich um eine Drehachse gelagert sind. Diese Welle wird über einen Antrieb gesteuert. Bei der Steuerung wird die Welle um einen geringen Schwenkwinkel rotiert, so dass die Greifereinheiten sich jeweils zu den Kästen bewegen. Durch diese Bewegung greifen die Greiferfinger der jeweiligen Greifereinheiten in die Ausnehmungen der Kästen. Je nach Ausprägung und Form der Kästen greift zumindest ein Greiferfinger der jeweiligen Greifereinheit in die entsprechende Ausnehmung des jeweiligen Kastens ein, so dass der aktive Greiferfinger den Kasten an der eigentlichen Griffleiste bzw. Grifftragefläche anheben bzw. greifen kann. Die weiteren Greiferfinger, die aus geometrischen Gründen nicht die Aufgabe erfüllen können, die Kästen zu erfassen oder zu greifen, laufen entweder ins Leere der Ausnehmung oder stoßen an eine obere oder untere Kante der Kastenwandung an. Dieser Anstoß und das daraus resultierende Ausweichen des Greiferfingers werden durch die erwähnte Rückstellkraft der Feder ermöglicht.

Die Anzahl der Greifereinheiten einer Greifervorrichtung kann unterschiedlich sein. Beispielsweise können zum Anheben von zwei Kästen drei oder auch vier Greifereinheiten verwendet werden. Der Aufbau bzw. Zusammenbau einer Greifervorrichtung ist somit abhängig von der Anzahl der Greifereinheiten. Unter anderem ist die Anzahl der Greifereinheiten auch von der Formation der Kästen abhängig. Um das Anheben der Kästen mittels der Greifereinheiten zu ermöglichen, können die Greiferfinger einer Greifereinheit von außen als auch von innen in die Ausnehmung der Kästen greifen. Werden beispielsweise zwei Kästen mit drei Greifereinheiten angehoben, so können die hakenförmigen Enden der Greiferfinger von mindestens zwei Greifereinheiten in die gleiche Richtung weisen, d.h. dass beispielsweise die Greiferfinger der äußeren angebrachten Greifereinheiten von außen nach innen die Kästen erfassen können oder auch von innen nach außen. Die dritte Greifereinheit, die in der Mitte angeordnet ist, greift beiden Kästen von innen und hebt beide diese an.

Ebenso ist möglich, dass die hakenförmigen Enden der Greiferfinger einer jeden Greifereinheit in die gleiche Richtung weisen.

Eine weitere Variante wäre, dass immer nur paarweise die hakenförmigen Enden der Greiferfinger zweier Greifereinheiten zu einander gerichtet sind. In diesem Fall schwenken die Greiferfinger der Greifereinheiten von außen nach innen in die Ausnehmung des Kastens ein oder stoßen an die Kastenwandung. Eine weitere Möglichkeit, dass paarweise die hakenförmigen Enden der Greiferfinger zweier Greifereinheiten voneinander abweisen, so dass die Greiferfinger von innen nach außen in die Ausnehmung des Kastens eingreifen oder an die Kastenwandung anstoßen.

Die Greifervorrichtung umfasst allerdings mindestens zwei Greifereinheiten, die mit jeweils mindestens zwei Greiferfingern ausgestaltet sind. Diese Greifereinheiten sind, wie eben erwähnt, jeweils gegenüber liegend oder auch versetzt gegenüberliegend angeordnet, so dass diese beispielsweise einen oder mehrere Kästen greifen können.

Ferner weisen die hakenförmigen Enden der Greiferfinger einer jeden Greifereinheit in eine Richtung. Die erfindungsgemäße Vorrichtung kann vorsehen, dass eine Greifereinheit drei oder mehr derartige Greiferfinger aufweist. Jedoch sollte eine Greifereinheit mindestens zwei Greiferfinger umfassen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt schematisch in einer Seitenansicht den Aufbau eines Ausschnittes einer Greifervorrichtung zum Erfassen oder Greifen von Kästen.
Fig. 2 zeigt in einer schematischen Perspektivdarstellung den Aufbau einer Greifereinheit der Greifervorrichtung.
Fig. 3 zeigt eine weitere schematische Perspektivdarstellung der Greifereinheit gemäß Fig. 2.
Fig. 4 zeigt eine schematische Schnittdarstellung eines Kastens, der mit zwei Greifereinheiten erfasst wird.
Fig. 5 zeigt unterschiedliche Anordnungen von Greifereinheiten in einer Greifervorrichtung.

Die folgende detaillierte Beschreibung einer bevorzugten Ausführungsform der Erfindung dient als nicht einschränkendes Beispiel und nimmt auf die beigefügten Zeichnungen Bezug. Gleiche Bauteile weisen dabei grundsätzlich gleiche Bezugszeichen auf und werden teilweise nicht mehrfach erläutert.

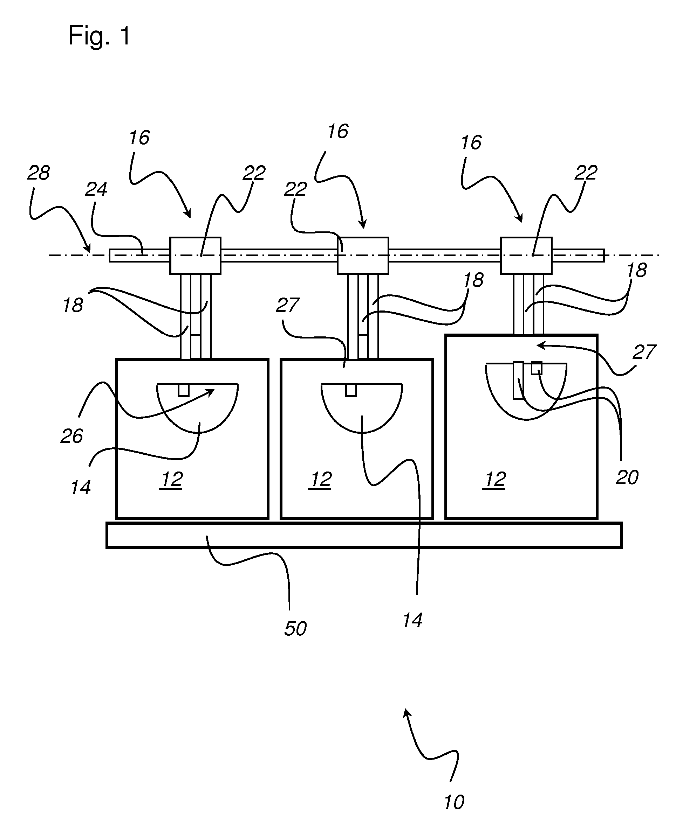

Die schematische Seitenansicht der Fig. 1 verdeutlicht den Aufbau einer Greifervorrichtung 10 zum Erfassen oder Greifen von Kästen 12, in denen sich wahlweise Getränkebehälter oder Flaschen (hier nicht dargestellt) befinden können. Die Kästen 12 sind jeweils nach oben offen und weisen jeweils seitliche Ausnehmungen 14 auf. Zudem sind in der Fig. 1 mehrere unterschiedlich große Kästen 12 dargestellt, die in regelmäßiger Anordnung auf beispielsweise auf einer Palette 50 oder einer dergleichen Auflagefläche stehen.

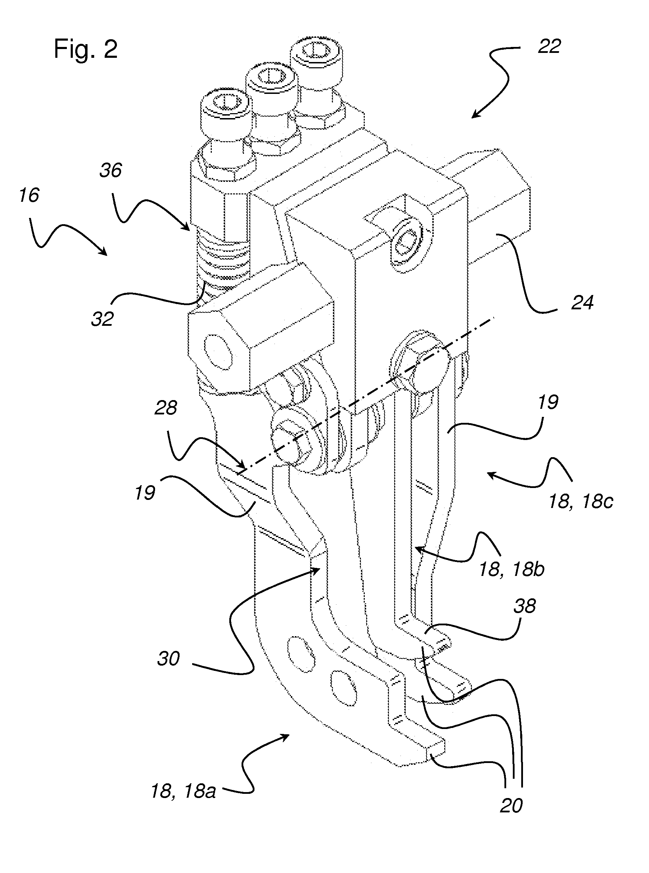

Die Greifervorrichtung 10 weist mehrere verschwenkbare Greifereinheiten 16 auf, die jeweils mit in die seitlichen Ausnehmungen 14 der Kästen 12 einschwenkbaren Greiferfingern 18 versehen sind, die jeweils hakenförmige Enden 20 (vgl. Fig. 2) aufweisen. Im gezeigten Ausführungsbeispiel weist jede Greifereinheit 16 drei Greiferfinger 18 mit zugehörigen hakenförmigen Enden 20 auf, die in unterschiedlichen Höhen angeordnet sind. Auf diese Weise können unterschiedliche Kastenarten sowie Kästen 12 mit unterschiedlich großen Ausnehmungen 14 bzw. mit Ausnehmungen 14 in unterschiedlichen Höhen gehandhabt und zu Gebindelagen palettiert werden. Dadurch, dass die mindestens zwei Greiferfinger 18 jeder Greifereinheit 16 in unterschiedlichen Höhen angeordnet sind, ist die Greifervorrichtung 10 relativ tolerant hinsichtlich unterschiedlicher Kastenhöhen und/oder Größen, Abmessungen und/oder Höhen deren seitlicher Ausnehmungen 14. Verschiedene Kästen 12 mit in unterschiedlichen Höhen befindlichen Ausnehmungen 14 können mit Hilfe der in unterschiedlichen Höhen eingreifenden Greiferfinger 18 problemlos gehandhabt werden.

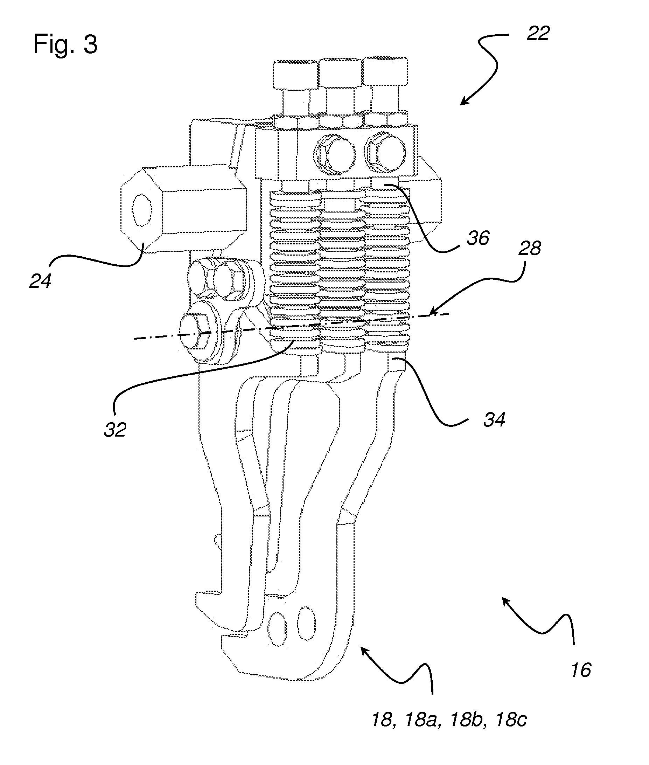

Die Greiferfinger 18 der Greifereinheiten 16 sind jeweils in einem Sockelbereich 22 gelagert und unabhängig voneinander verschwenkbar. Zudem sind die einzelnen Greiferfinger 18 um eine gemeinsame Drehachse 28 im Sockelbereich 22 beweglich gelagert, wie dies in den Figuren 2 und 3 im Detail verdeutlicht ist. Die unabhängige Lagerung ermöglicht den Eingriff in unterschiedliche Kastenausnehmungen 14, wobei der jeweils passende Greiferfinger 18 in die Ausnehmung 14 eingreift, während der oder die anderen Greiferfinger 18 nicht eingreifen müssen und aufgrund ihrer schwenkbaren Lagerung ausweichen und/oder von den geschlossenen Bereichen der Kastenwände 27 in eine Ausweichbewegung gezwungen werden können.

Die Greifvorrichtung 10 umfasst mindestens zwei solcher Anordnungen, wie sie in Fig. 1 erkennbar sind. Somit umfasst die Greifervorrichtung 10 insgesamt mehrere Greifereinheiten 16, mit ihren Sockelbereichen 22 jeweils auf einer gemeinsamen Welle 24 gelagert sind. Die Welle 24 wird über einen Antrieb (hier nicht dargestellt) gesteuert und bewegt. Bei der Steuerung rotiert die Welle 24 um einen geringen Schwenkwinkel, der ausreicht, die Greifereinheiten 16 jeweils zu den Kästen 12 zu bewegen, sobald diese aufgenommen werden sollen. Durch die Zustellbewegung greifen die Greiferfinger 18 der jeweiligen Greifereinheiten 16 in die Ausnehmungen 14 der Kästen 12. Je nach Ausprägung und Formgebung der Kästen 12 greift ein Greiferfinger 18 der jeweiligen Greifereinheit 16 unter eine Grifftragefläche 26 in die Ausnehmung 14 der Kästen 12. Die weiteren Greiferfinger 18, die aus geometrischen Gründen nicht zum Einsatz kommen, um die Kästen 12 an den Grifftrageflächen 26 zu erfassen, greifen entweder ins Leere, somit in die Ausnehmung 14 der Kästen 12 oder sie stoßen oberhalb und/oder unterhalb der Ausnehmung 14 an eine beliebige Stelle der Kastenwandung 27 an. Dieser Anstoß sowie das daraus resultierende Ausweichen des Greiferfingers 18 wird durch ihre gefederte Lagerung ermöglicht. Eine weitere Ausführungsform ist, dass nur ein Greiferfinger 18 verwendet wird. Greift dieser Greiferfinger 18 in die Ausnehmung 14 der Kästen 12, so ist dieser zum Anheben und Greifen des Kastens 12 notwendig. Das Anheben und Greifen des Kastens 12 wird damit erreicht, indem die Greifereinheit 16 angehoben wird, bis der Greiferfinger 18 mit der Grifftragefläche 26 des Kastens 12 in Kontakt ist.

Wie bereits erwähnt wurde, umfasst die Greifervorrichtung 10 mindestens zwei Greifereinheiten 16, die vorzugsweise jeweils mit mindestens zwei Greiferfinger 18 ausgestaltet sind. Diese Greifereinheiten 16 sind jeweils gegenüber liegend angeordnet, so dass diese einen Kasten 12 von beiden Seiten greifen können. Hierzu weisen die hakenförmigen Enden 20 einer jeden Greifereinheit 16 in eine Richtung und beim Zusammenwirken beider Greifereinheiten 16 sind die hakenförmigen Enden 20 zur Kastenmitte gerichtet. Wie in Fig. 1 erkennbar, weist die Greifervorrichtung 10 drei oder mehr Greifereinheiten 16 auf, die auf einer gemeinsamen Welle 24 gelagert sind, wovon immer nur eine der sich gegenüber liegenden Paare von Greifereinheiten 16 gezeichnet sind. Es können jedoch auch vier, fünf oder mehr solcher Paare vorhanden sein.

Die schematischen Perspektivdarstellungen der Figuren 2 und 3 zeigen den Aufbau einer Greifereinheit 16 der Greifervorrichtung 10 aus Fig. 1. Die dargestellte Greifereinheit 16 weist hier insgesamt drei Greiferfinger 18 auf, die gemeinsam im Sockelbereich 22 gelagert und unabhängig voneinander verschwenkbar sind. Erkennbar ist weiterhin die feste Verschraubung des Sockelbereichs 22 auf der sechskantförmigen Welle 24. Die Greiferfinger 18 sind auf einer gemeinsamen Drehachse 28 im Sockelbereich 22 beweglich gelagert. Damit die Greiferfinger 18 Platz sparend eng nebeneinander montiert werden können, weist ein erster Greiferfinger 18a eine C-förmige Kontur mit einer Aussparung 30 auf, die einen Bewegungsraum für einen zweiten Greiferfinger 18b bildet. Bei dieser Anordnung fluchten die beiden Greiferfinger 18a und 18b annähernd in einer Ebene und sind in einer gemeinsamen oder annähernd deckungsgleichen Bewegungsebene verschwenkbar. Ein dritter Greiferfinger 18c ist neben den beiden anderen Greiferfingern 18a und 18b angeordnet und ist in einer dazu parallelen Bewegungsebene verschwenkbar.

In den Darstellungen der Figuren 1 und 2 wird erkennbar, dass die Greiferfinger 18a, 18b und 18c jeweils unterschiedlich lange Schenkel 19 besitzen, so dass ihre hakenförmigen Greiferenden 20 jeweils in unterschiedlichen Höhen angeordnet sind. Die Schenkel 19 der Greiferfinger 18 können gerade oder gekröpft sein, wie dies in Fig. 2 und 3 angedeutet ist und sind annähernd parallel zueinander angeordnet. Hierbei weist der erste Greiferfinger 18a und der dritte Greiferfinger 18c jeweils eine Kröpfung auf, während der zweite Greiferfinger 18b ungekröpft ist, so dass die hakenförmigen Enden 20 sehr nah beeinander stehen. In dieser Formgebung lassen sich die Greiferfinger 18 relativ einfach mittels Stanz- und/oder Biegevorgängen aus einem geeigneten Blechmaterial herstellen.

Damit eine unabhängige Bewegung und Aktivierung der einzelnen Greiferfinger 18 gewährleistet ist, sind die Greiferfinger 18 einer jeden Greifereinheit 16 jeweils mit einer Rückstellfeder 32 ausgestattet, wobei deren Rückstellkraft einer Ausweichbewegung der beweglich gelagerten Greiferfinger 18 beim Auftreffen auf eine Seitenwand oder Kastenwand 27 eines zu greifenden Kastens 12 entgegen wirkt. Ein in die Kastenausnehmung 14 eingreifender Greiferfinger 18 wird durch die Rückstellkraft der Feder 32 in Richtung seiner Ruhelage verschwenkt, während der oder die anderen Greiferfinger 18 stärker vorgespannt sind. Mit dieser Ausgestaltung wird nur derjenige Greiferfinger 18 aktiviert, der die passende Länge des Schenkels 19 besitzt, um in die Ausnehmung 14 des jeweiligen Kastens 12 einzuschwenken und diesen zu greifen. Ein Greiferfinger 18, der an einer Kastenwand 27 ansteht, wird durch die Rückstellkraft etwas um die Drehachse 28 nach hinten verschwenkt.

Zur Abstützung und Fixierung der Rückstellfedern 32 weisen die Greiferfinger 18 jeweils Absätze 34 an ihren Rückseiten auf, wie dies in Fig. 3 verdeutlicht ist. Die Unterseiten der Federn 32 liegen auf diesen Absätzen 34 auf, während ihre Oberseiten jeweils in verstellbaren Federlagern 36 abgestützt sind, die mittels Verschraubungen im Sockelbereich 22 fixiert sind. Auf diese Weise sind die Rückstellkräfte der Federn 32 für die einzelnen Greiferfinger 18 jeweils justierbar. Dies dient beispielsweise dazu, die unterschiedlich langen und damit mit unterschiedlichen Hebelkräften am Kasten 12 angreifenden Greiferfinger 18 mit einer nahezu gleichen Rückstellkraft zu versehen.

Die Haken 20 der Greiferfinger 18 weisen jeweils eine Auflagefläche 38 auf, die die Kästen 12 in ihren Ausnehmungen 14 greift. Damit die Kästen 12 während ihres Palettierens sicher geführt werden, können die Auflageflächen 38 beispielsweise geriffelt, gezahnt und/oder beschichtet und/oder mit einem rutschhemmenden Material versehen sein.

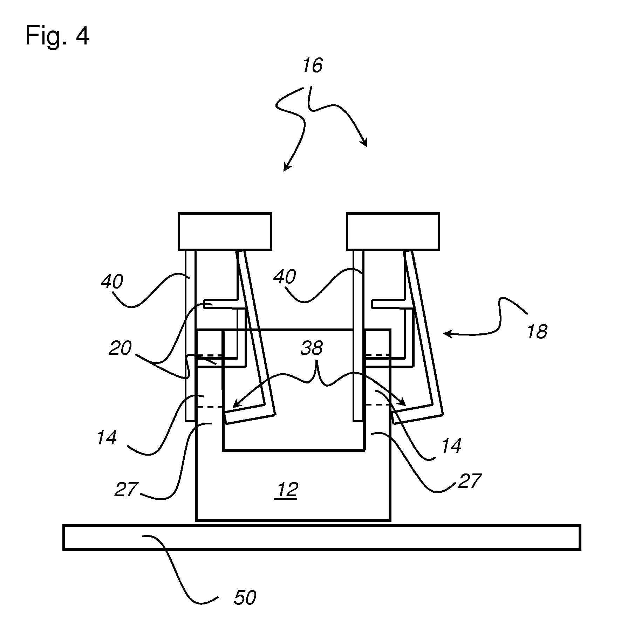

Die Figur 4 zeigt eine schematische Schnittdarstellung eines Kastens 12, der beispielsweise auf einer Palette 50 steht und mittels zwei Greifereinheiten 16 erfasst und/oder gegriffen wird. Die hakenförmigen Enden 20 der Greiferfinger 18 weisen eine Auflagefläche 38 auf, die den Kasten 12 in seinen Ausnehmungen 14 greift und anhebt. Damit der Kasten 12 während seines Palettierens sicher geführt wird, können die Auflageflächen 38 vorzugsweise geriffelt und/oder beschichtet und/oder ein rutschhemmendes Material (nicht dargestellt) aufweisen. Weiterhin können sogenannte Zentrierfinger 40 als Gegenlager der gefederten Greiferfinger 18 (vgl. Fig. 2 und 3) dienen. Dabei sind die Zentrierfinger 40 an der Gegenseite der Kastenwand 27 und direkt gegenüber den gefederten Greiferfingern 18 so angeordnet, dass sie bei beispielsweise nachgebenden Kastenwandungen 27 abstützend wirken, so dass eine Verformung der Kastenwand 27 verhindert wird.

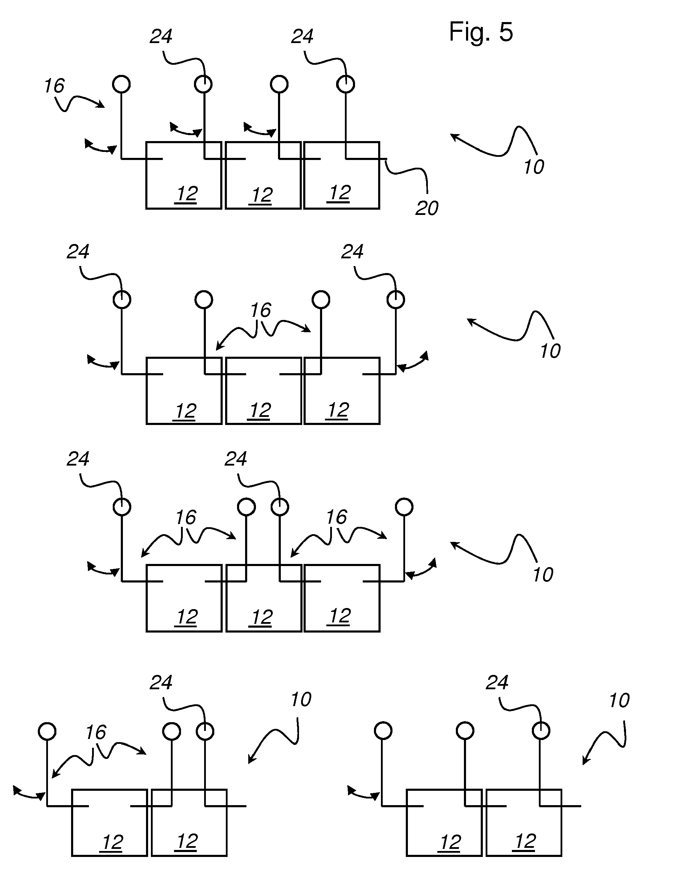

Die Figur 5 zeigt unterschiedliche Anordnungen von Greifereinheiten 16, die das Greifen und/oder Erfassen von Kästen in einer Greifervorrichtung 10 ermöglichen. Diese Varianten sollen keine abschließende Auflistung darstellen, da letztendlich alle denkbaren Anordnungen der Greifereinheiten 16 möglich sind. Die Anzahl der Kästen 12 ist abhängig von der Anzahl der Greifereinheiten 16 und wie diese in einer Greifervorrichtung 10 zueinander angeordnet sind. Mit einem angedeuteten Doppelpfeil soll die Schwenkbewegung der jeweiligen schwenkbar gelagerten Greifereinheiten 16 dargestellt werden. Die hakenförmigen Enden 20 schwenken in Richtung der Ausnehmung 14 (vgl. Fig. 1 oder Fig. 4) der Kästen 12. Die Greifereinheiten 16 sind auf der Welle 24 gelagert.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen, der durch den Inhalt der Ansprüche bestimmt wird.

### Bezugszeichenliste:

- 10: Greifervorrichtung
- 12: Kasten, Getränkekasten
- 14: Ausnehmung
- 16: Greifereinheit
- 18: Greiferfinger
- 18a: erster Greiferfinger
- 18b: zweiter Greiferfinger
- 18c: dritter Greiferfinger
- 19: Schenkel
- 20: hakenförmiges Enden, Haken
- 22: Sockelbereich
- 24: Welle
- 26: Grifftragefläche
- 27: Kastenwand
- 28: Drehachse
- 30: Aussparung
- 32: Rückstellfeder
- 34: Absatz
- 36: verstellbares Federlager
- 38: Auflagefläche
- 40: Zentrierfinger
- 50: Palette

## Patentansprüche

1. Greifervorrichtung (10) zum Erfassen und Greifen von nach oben offenen und mit seitlichen Ausnehmungen (14) versehenen Kästen (12) mit oder ohne darin befindlichen Getränkebehältern oder Flaschen, mit mindestens zwei Greifereinheiten (16), mit jeweils einer Auflagefläche (38) und einer Mehrzahl von durch Anheben bewegbaren und jeweils in die seitlichen Ausnehmungen (14) der Kästen (12) einbringbaren Greiferfinger (18) mit hakenförmigen Enden (20) aufweisen, **dadurch gekennzeichnet, dass** die Greiferfinger (18) der Greifereinheiten (16) in einem Sackeliaereich (22) gelagert und unabhängig voneinander verschwenkbar oder bewegbar sind, wobei die hakenförmigen freien Enden (20) der Greiferfinger (18) einer Greifereinheit (16) jeweils in eine gleiche Richtung weisen und wobei die hakenförmigen Enden (20) der wenigstens zwei separat mit den Kastenausnehmungen (14) in Eingriff bringbaren Greiferfinger (18) der jeweiligen Greifereinheiten (16) bezüglich der Kastenausnehmungen (14) in unterschiedlichen Höhen angeordnet sind, und wobei die einzelnen Greiferfinger (18) um eine im Sockelbereich (22) befindliche gemeinsame Drehachse (28) beweglich sind.

2. Greifervorrichtung nach Anspruch1, bei der wenigstens einer der Greiferfinger (18, 18a) eine Aussparung (30) aufweist, die für einen versetzt dazu übereinander angeordneten weiteren Greiferfinger (18, 18b) einen Bewegungsraum bildet.

3. Greifervorrichtung nach einem der Ansprüche 1 bis 2, bei der wenigsten zwei Greiferfinger (18, 18a, 18b) annähernd innerhalb einer Bewegungsebene angeordnet sind und/oder miteinander fluchten.

4. Greifervorrichtung nach einem der Ansprüche 1 bis 3, bei der Schenkel (19) der Greiferfinger (18, 18a, 18b) unterschiedliche Längen aufweisen und annähernd parallel zueinander angeordnet sind.

5. Greifervorrichtung nach einem der Ansprüche 1 bis 4, bei der den einzelnen Greiferfingern (18, 18a, 18b, 18c) jeweils Rückstellfedern (32) zugeordnet sind.

6. Greifervorrichtung nach Anspruch 5, bei der eine Rückstellkraft der Rückstellfeder (32) jedes einzelnen Greiferfingers (18, 18a, 18b, 18c) justierbar ist.

7. Greifervorrichtung nach einem der Ansprüche 1 bis 6, bei der die Greifereinheiten (16) mittels einer im Sockelbereich (22) fixierten Welle (24) jeweils um eine Drehachse (28) verschwenkbar gelagert sind.

8. Greifervorrichtung nach Anspruch 7, bei der die Welle (24) mit einem Antrieb gekoppelt ist zur Steuerung einer Verschwenkbewegung der Greiferfinger (18) der jeweiligen Greifereinheiten (16).

9. Greifervorrichtung nach einem der Ansprüche 1 bis 8, bei der die Vorrichtung (10) mindestens zwei Greifereinheiten (16) umfasst, die mit einander zugewandten und/oder abgewandten Greiferfingern (18) paarweise angeordnet sind.

10. Greifervorrichtung nach einem der Ansprüche 1 bis 9, bei der die Vorrichtung (10) mindestens zwei Greifereinheiten (16) umfasst, bei der die Greiferfingern (18) einander gegenüber liegend oder versetzt zueinander angeordnet sind.

11. Greifervorrichtung nach einem der Ansprüche 1 bis 10, bei der die Vorrichtung (10) mindestens zwei Greifereinheiten (16) mit jeweils drei daran beweglich angeordneten Greiferfingern (18) umfasst.

12. Greifervorrichtung nach einem der Ansprüche 1 bis 11, bei der zumindest einer der Greifereinheiten (16) ein den Greiferfingern (18) gegenüber liegend angeordneter Zentrierfinger (40) zur Abstützung und/oder Stabilisierung einer Kastenwandung (27) beim Eingriff der Greiferfinger (18) der jeweiligen Greifereinheit (16) zugeordnet ist.

## Claims

1. A gripping apparatus (10) for seizing and gripping boxes (12) with or without beverage containers or bottles in them, which boxes (12) are open to the top and which are provided with lateral recesses (14), with the gripping apparatus (10) having at least two gripper units (16), each with a support surface (38) and with a plurality of gripper fingers (18) with hook-shaped ends (20), which gripper fingers (18) are movable by being lifted and which are respectively insertable into the lateral recesses (14) of the boxes (12), **characterised in that** the gripper fingers (18) of the gripper units (16) are mounted in a base section (22) and are pivotable or movable independently of each other, wherein the hook-shaped free ends (20) of the gripper fingers (18) of a gripper unit (16) each point in a same direction and wherein the hook-shaped ends (20) of the at least two gripper fingers (18) of the respective gripper units (16), which gripper fingers (18) are separately insertable into the box recesses (14), are arranged at different heights in relation to the box recesses (14), and wherein the individual gripper fingers (18) are movable about a common pivot axis (28), which is located in the base section (22).

2. The gripping apparatus as recited in claim 1 wherein at least one of the gripper fingers (18, 18a) has a cut-out portion (30), which forms a moving range for a further gripper finger (18, 18b) arranged in a position offset from and above the said gripper finger (18, 18a).

3. The gripping apparatus as recited in one of the claims 1 to 2 wherein at least two gripper fingers (18, 18a, 18b) are arranged approximately within one plane of movement and/or aligned with each other.

4. The gripping apparatus as recited in one of the claims 1 to 3 wherein shanks (19) of the gripper fingers (18, 18a, 18b) have different lengths and are arranged approximately in parallel to each other.

5. The gripping apparatus as recited in one of the claims 1 to 4 wherein the individual gripper fingers (18, 18a, 18b, 18c) are each assigned return springs (32).

6. The gripping apparatus as recited in claim 5 wherein a restoring force of the return spring (32) is adjustable individually for each gripper finger (18, 18a, 18b, 18c).

7. The gripping apparatus as recited in one of the claims 1 to 6 wherein the gripper units (16) are each mounted pivotably about a pivot axis (28) by means of a shaft (24), which is fixedly attached in the base section (22).

8. The gripping apparatus as recited in claim 7 wherein the shaft (24) is coupled to a drive for controlling a pivoting movement of the gripper fingers (18) of the respective gripper units (16).

9. The gripping apparatus as recited in one of the claims 1 to 8 wherein the apparatus (10) comprises at least two gripper units (16), which are arranged pairwise with the gripper fingers (18) facing toward each other and/or facing away from each other.

10. The gripping apparatus as recited in one of the claims 1 to 9 wherein the apparatus (10) comprises at least two gripper units (16), in which the gripper fingers (18) are arranged opposite each other or offset from each other.

11. The gripping apparatus as recited in one of the claims 1 to 10 wherein the apparatus (10) comprises at least two gripper units (16) with three gripper fingers (18) movably arranged on each of said gripper units (16).

12. The gripping apparatus as recited in one of the claims 1 to 11 wherein at least one of the gripper units (16) is assigned a centring finger (40) arranged opposite the gripper fingers (18) for supporting and/or stabilising a box wall (27) when inserting the gripper fingers (18) of the respective gripper unit (16).

## Revendications

1. Dispositif de préhension (10) destiné à saisir et à prendre des caisses (12) qui sont ouvertes vers le haut et pourvues d'évidements latéraux (14) et qui sont pourvues ou dépourvues de récipients de boisson ou bouteilles y situés, comprenant au moins deux unités de préhension (16), avec respectivement une surface d'appui (38) et une pluralité de doigts de préhension (18) à extrémités (20) en forme de crochet, qui peuvent être déplacés en les soulevant et peuvent être introduits chacun dans lesdites évidements latéraux (14) des caisses (12), **caractérisé par le fait que** lesdits doigts de préhension (18) des unités de préhension (16) sont logés dans une zone de socle (22) et aptes à pivoter ou à être déplacés indépendamment les uns des autres, les extrémités libres (20) en forme de crochet des doigts de préhension (18) d'une unité de préhension (16) montrant chacune dans une même direction, et les extrémités (20) en forme de crochet desdits au moins deux doigts de préhension (18) des unités de préhension (16) respectives, qui peuvent être mis en prise séparément avec les évidements de caisse (14), étant disposées à des hauteurs différentes par rapport aux évidements de caisse (14), et les doigts de préhension (18) individuels étant mobiles sur un axe de rotation (28) commun situé dans ladite zone de socle (22).

2. Dispositif de préhension selon la revendication 1, dans lequel l'un au moins desdits doigts de préhension (18, 18a) présente une réservation (30) qui forme un espace de mouvement pour un autre doigt de préhension (18, 18b) disposé au-dessus de manière décalée par rapport à celui-ci.

3. Dispositif de préhension selon l'une quelconque des revendications 1 à 2, dans lequel au moins deux doigts de préhension (18, 18a, 18b) sont disposés approximativement dans un plan de déplacement et/ou sont alignés entre eux.

4. Dispositif de préhension selon l'une quelconque des revendications 1 à 3, dans lequel des branches (19) des doigts de préhension (18, 18a, 18b) présentent des longueurs différentes et sont disposées d'une manière approximativement parallèle entre elles.

5. Dispositif de préhension selon l'une quelconque des revendications 1 à 4, dans lequel des ressorts de rappel (32) sont associés respectivement aux doigts de préhension (18, 18a, 18b, 18c) individuels.

6. Dispositif de préhension selon la revendication 5, dans lequel une force de rappel du ressort de rappel (32) de chaque doigt de préhension (18, 18a, 18b, 18c) individuel est ajustable.

7. Dispositif de préhension selon l'une quelconque des revendications 1 à 6, dans lequel les unités de préhension (16) sont logées à pivotement, au moyen d'un arbre (24) fixé dans la zone de socle (22), respectivement autour d'un axe de rotation (28).

8. Dispositif de préhension selon la revendication 7, dans lequel ledit arbre (24) est couplé à un mécanisme d'entraînement pour commander un mouvement de pivotement des doigts de préhension (18) des unités de préhension (16) respectives.

9. Dispositif de préhension selon l'une quelconque des revendications 1 à 8, dans lequel le dispositif (10) comprend au moins deux unités de préhension (16) qui sont disposées par paire avec les doigts de préhension (18) montrant les uns vers les autres et/ou dans la direction opposée les uns aux autres.

10. Dispositif de préhension selon l'une quelconque des revendications 1 à 9, dans lequel le dispositif (10) comprend au moins deux unités de préhension (16) dans lesquelles les doigts de préhension (18) sont disposés en vis-à-vis les uns des autres ou décalés les uns par rapport aux autres.

11. Dispositif de préhension selon l'une quelconque des revendications 1 à 10, dans lequel le dispositif (10) comprend au moins deux unités de préhension (16) comprenant chacune trois doigts de préhension (18) disposés de façon mobile sur celles-ci.

12. Dispositif de préhension selon l'une quelconque des revendications 1 à 11, dans lequel à l'une au moins des unités de préhension (16) est associé un doigt de centrage (40) disposé en vis-à-vis des doigts de préhension (18) et destiné à appuyer et/ou à stabiliser une paroi de caisse (27) lorsque les doigts de préhension (18) de l'unité de préhension (16) respective sont en prise.
